# EUROPEAN PATENT SPECIFICATION

(11) **EP 0 446 040 B1**
(45) Date of publication and mention of the grant of the patent: **30.11.1994**
(21) Application number: 91301881.8
(22) Date of filing: 06.03.1991
(51) Int. Cl.: B29C 35/08

(54) **Photopolymerization molding apparatus**
Photopolymerisationsformapparat
Dispositif pour moulage par photopolymérisation

(30) Priority: 07.03.1990 JP 53757/90
(43) Date of publication of application: 11.09.1991
(73) Proprietor: JAPAN INSTITUTE OF ADVANCED DENTISTRY, Tokyo 101 (JP)
(72) Inventor: Masuhara, Eiichi, Tokyo 113 (JP); Komiya, Shigeo, Urawa-shi, Saitama 336 (JP); Sawamoto, Takeyuki, Tokyo 167 (JP)
(74) Representative: Diamond, Bryan Clive

(56) References cited:
- EP-A- 0 047 645
- EP-A- 0 172 143
- EP-A- 0 243 501
- US-A- 4 171 941
- US-A- 4 463 881
- DERWENT FILE SUPPLIER WPIL, accession no. 91-019104 [03], Derwent Publications Ltd, London, GB; & JP-A-2 292 013 (SOGO SHIKA-IRYO KEN) 03-12-1990
- PATENT ABSTRACTS OF JAPAN, vol. 13, no. 425 (M-873)[3773], 21st September 1989;& JP-A-1 163 049 (NIKKA ENG. K.K.) 27-06-1989
- PATENT ABSTRACTS OF JAPAN, vol. 5, no. 25 (M-55)[697], 14th February 1981;& JP-A-55 152 027 (MATSUSHITA DENKI SANGYO K.K.) 27-11-1980
- PATENT ABSTRACTS OF JAPAN, vol. 6, no. 56 (M-121)[934], 13th April 1982;& JP-A-56 167 419 (TOPPAN INSATSU K.K.) 23-12-1981
- PATENT ABSTRACTS OF JAPAN, vol. 9, no. 87 (M-372)[810], 17th April 1985;& JP-A-59 215 838 (MITSUBISHI DENKI K.K.) 05-12-1984

## Description

The present invention relates to an apparatus for molding a photopolymerizable resin material. More particularly, the present invention relates to a photopolymerization molding apparatus which is capable of speedily and reliably curing a photopolymerizable resin material in a mold frame for polymerization and thereby efficiently mass-producing moldings of superior quality.

The production of orthodontic brackets, synthetic resin lenses, etc. by use of photopolymerizable resin materials has spread in recent years.

Photopolymerizable resin materials have the advantages that the polymerizing operation thereof is easier than that of conventional chemical polymerization type resin materials and thermal polymerization type resin materials, which necessitate mixing together a powder and a liquid, and polymerization can be performed within a relatively short time, and that since photopolymerizable resin materials are in the form of one paste (one pack), fewer air bubbles are mixed in the resulting polymerization moldings and it is therefore superior in various physical properties.

Examples of the prior art of producing photopolymerization moldings include a method wherein a photopolymerizable resin material that is filled in a mold frame made of a light-transmitting material is irradiated with light [e.g., Japanese Patent Laid-Open (KOKAI) No. 59-70508 (1984)] and a method wherein a photopolymerizable resin material that is filled in a mold frame of a light-transmitting material, which is provided with a gate, is irradiated with light to produce moldings continuously [e.g., Japanese Patent Laid-Open (KOKAI) No. 58-148728 (1983)]. However, these prior art methods need a considerably troublesome operation in which the operator must open the frame to remove the molded product for each cycle of the molding process and fill a photopolymerizable resin material into the frame by some way for the subsequent cycle, and are therefore inferior in productivity.

In addition, since photopolymerizable resin materials, which are in the form of liquid or paste, have high fluidity, when such a photopolymerizable resin material is filled into a mold frame, it is likely that the resin material will be extruded from the parting face of the frame or the frame will be undesirably opened. Such problems can be avoided by applying no pressure to a photopolymerizable resin material when filled into the frame. However, the photopolymerizable resin material cannot be filled in every corner of the cavity in the mold frame simply by casting it into the frame. Therefore, in such a case the resulting product is defective.

In the conventional synthetic resin molding technology, injection molding apparatus and reaction injection molding apparatus (RIM apparatus) are known as molding apparatuses which have a mold clamping device that clamps a mold after it has been attached in position to fill a resin material into the mold under pressure. However, since a resin material that is used in molding by an injection molding apparatus is a thermoplastic resin material, it is lacking in fluidity even in a molten state, so that a filling pressure of tens of millions of Pascals (several hundreds kgf/cm²) or more is required to fill the molten resin into the mold. Correspondingly, a mold clamping force of from tens of thousands to several millions of Newtons (several tons to several hundreds of tons) is needed. For this reason, injection molding apparatuses are increasing in size. Meantime, the RIM apparatus molds low-viscosity liquid polyurethane and hence requires only a low pressure of the order of several hundreds of thousands Pa (several kgf/cm²) to fill the resin material into the mold. However, the RIM apparatus needs a high-pressure mixer to mix together an isocyanate compound and an isocyanate reactive compound to form polyurethane in the apparatus and therefore requires a high pressure of tens of millions of Pascals (several hundreds kgf/cm²) or more after all, resulting in an increase in the size of the apparatus likewise. In addition, since the molding time in the RIM apparatus is as long as several minutes to several tens of minutes in general, the RIM apparatus is suitable only for large-size moldings from the viewpoint of production efficiency. In consequence, the size of the mold that is employed in the RIM apparatus is relatively large and the mold clamping force is more than hundreds of thousands of Newtons (several tens of tons). Thus, the size of the RIM apparatus is unavoidably large in the present state of art.

As the size of a molding apparatus increases, not only does the space needed for installing it increase correspondingly, but also special construction work is needed for installation of the apparatus. Accordingly, the apparatus cannot readily be moved, which is very inconvenient.

In addition, hydraulic equipment is generally employed to produce power for a molding apparatus that needs such a high pressure and hence a hydraulic oil that is used in the hydraulic equipment may contaminate the molding apparatus and moldings. Accordingly, such hydraulic equipment hinders the production of clean moldings.

Under these circumstances, it has heretofore been disadvantageous to employ the injection molding process or the RIM molding process as it is for photopolymerization molding process.

The present inventors conducted exhaustive studies in order to solve the above-described problems of the prior art and, as a result, succeeded in developing a photopolymerization molding apparatus, described below, which is superior in productivity in continuous operation.

JP-A-1-163049 and JP-A-59-21583 each describe a photopolymerization molding apparatus having a two-part mold, a resin feeding device and an ultraviolet light sorce arranged to irradiate a material in the mold.

The present invention provides a photopolymerization molding apparatus which comprises a photopolymerizable resin molding frame comprising a movable frame member and a fixed frame member, a device for feeding photopolymerizable resin provided adjacent to said fixed frame member, a light-transmitting portion provided in each or either one of said movable and fixed frame members of said frame; and a light irradiator for photopolymerisation is disposed at a predetermined position where it can apply light to photopolymerizable resin material in said frame through said light-transmitting portion of said frame; characterised in that a light shutter mechanism is provided in the vicinity of the forward end of the resin feed section of said photopolymerizable resin feed device.

The light shutter mechanism is preferably provided at the tip of a nozzle that is formed in the resin feed section of the resin feed device. Preferably, the light shutter mechanism comprises a nozzle that is formed in the resin feed section of the resin feed device, and a resin extruding plunger that slides in the nozzle as far as the tip thereof.

As the ray of light that is emitted from the light irradiator, it is possible to employ any light ray which can cause polymerization reaction of the photopolymerizable resin material, e.g., ultraviolet rays, visible rays or other rays with various wavelengths. In general, however, it is preferable to employ visible rays, which can be transmitted through either a thin or thick object and which are harmless.

As the lamp of the light irradiator, a visible ray emitting lamp is particularly preferable. For example, a xenon lamp, halogen lamp, fluorescent lamp, etc. may be used. If necessary, a filter that cuts off ultraviolet and infrared rays may be provided in front of the lamp.

The lamp is, in general, installed outside the light-transmitting frame member. However, the light from the lamp may be guided into the frame through an optical fiber bundle by burying an end portion of the fiber bundle in the light-transmitting frame member.

The level of pressure that is applied to the photopolymerizable resin material during the light irradiation depends on the situation, but, in general, it is set in the low-pressure range of from 9.8 x 10² to 49.03 x 10⁵ Pa (0.01kgf/cm² to 50kgf/cm²).

The photopolymerizable resin material filled in the cavity defined in the frame is preferably pressurized by means of a mold clamping device, which comprises, for example, a fixed plate to which the fixed frame member is attached, a movable plate to which the movable frame member is attached, and a pressing device that moves the movable plate so as to press against the fixed plate.

In such a case, the apparatus is preferably arranged such that the movable plate for mounting the movable frame member is provided with a light-transmitting communicating portion (window) and the light irradiator is disposed at a position where it can introduce light into the frame through the light-transmitting communicating portion of the movable plate. Application of pressure to the photopolymerizable resin material is preferably realized by such a mold clamping device, as described above. However, it is also preferable to press continuously the resin extruding plunger of the resin feed device toward the frame during photopolymerization molding process, thereby simultaneously and continuously effecting mold clamping and the feed of the photopolymerizable resin material into the cavity in the frame.

Examples of photopolymerizable resin materials which are usable in the apparatus of the present invention include compositions each including at least one compound having at least one carbon-to-carbon unsaturated double bond in a molecule thereof, such as methyl (meth)acrylate, ethyl (meth)acrylate, propyl (meth)acrylate, butyl (meth)acrylate, bisphenol A di(meth)acrylate, ethylene oxide modified bisphenol A di(meth)acrylate, propylene oxide modified bisphenol A di(meth)acrylate, ethylene glycol di(meth)acrylate, triethylene glycol di(meth)acrylate, trimethylolpropane tri(meth)acrylate, pentaerythritol tri(meth)acrylate, dicyclopentanyl di(meth)acrylate, bisphenol A diglycidyl di(meth)acrylate, N-vinylpyrrolidone, styrene, vinyl acetate and acrylamide, each composition further having a photopolymerization initiator added thereto.

Examples of photopolymerization initiators usable in the present invention include benzoin ethers such as benzoin methyl ether, benzoin ethyl ether and benzoin butyl ether, benzophenone, thioxanthene, camphorquinone, benzyl, 1-hydroxycyclohexyl phenyl ketone, azobisisobutyronitrile and acetophenone.

Such a photopolymerization initiator is added to the above-described composition in the range of from 0.001 to 10% by weight. In addition, an organic or inorganic filler may be added to a photopolymerizable resin material comprising a composition and photopolymerization initiator such as those mentioned above.

Examples of organic or inorganic fillers include various polymer particles and ultrafine particles, silica powder, glass powder, ceramic powder, etc.

In addition, various stabilizers, e.g., a thermal polymerization inhibitor or an oxidation inhibitor, coloring agents, e.g., a dye, a pigment, etc., or various molding auxiliaries, e.g., a mold release agent, may be added to the photopolymerizable resin material, if necessary.

In the accompanying drawings:-
Fig. 1(a) is a fragmentary sectional view schematically showing one embodiment of the photopolymerization molding apparatus according to the present invention;
Fig. 1(b) is a fragmentary sectional view of the embodiment shown in Fig. 1(a) in a state where some parts of the apparatus are moved;
Fig. 2(a) is a fragmentary sectional view showing an essential part of another embodiment of the photopolymerization molding apparatus according to the present invention;
Fig. 2(b) is a fragmentary sectional view of the embodiment shown in Fig. 2(a) in a state where some parts of the apparatus are moved;
Fig. 3(a) is a fragmentary sectional view showing an essential part of still another embodiment of the photopolymerization molding apparatus according to the present invention; and
Fig. 3(b) is a fragmentary sectional view of the embodiment shown in Fig. 3(a) in a state where some parts of the apparatus are moved.

The present invention will be described below in more detail with reference to the embodiments shown in the drawings.

### Embodiment 1:

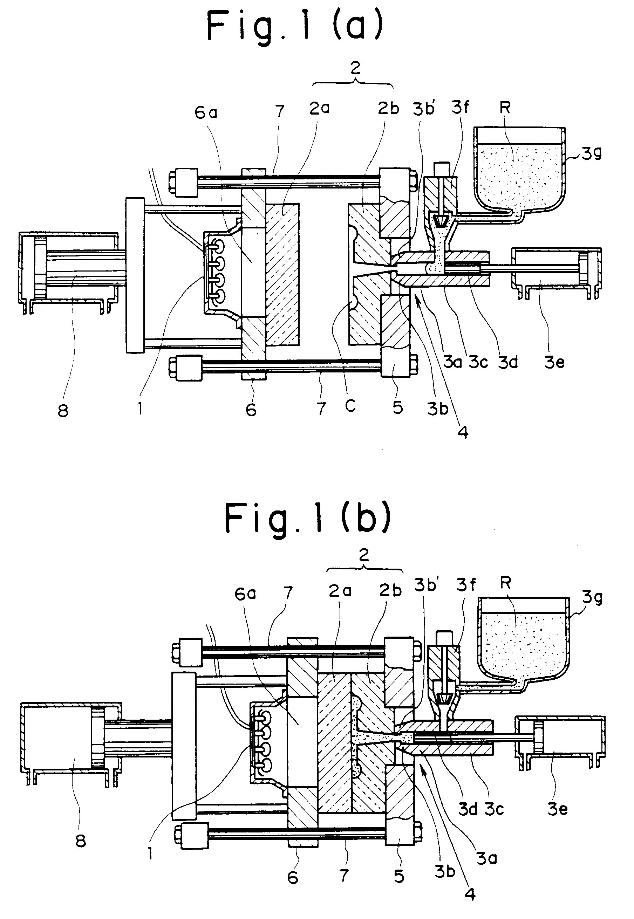

Fig. 1(a) is a schematic view showing one embodiment of the photopolymerization molding apparatus according to the present invention.

The apparatus has a light irradiator 1 for photopolymerization, a photopolymerizable resin molding frame 2 comprising a movable frame member 2a and a fixed frame member 2b, and a photopolymerizable resin feed device 3 that is provided adjacent to the fixed frame member 2b.

In this apparatus, a light shutter mechanism 4 is provided in the vicinity of the distal end 3a of a resin feed section of the photopolymerizable resin feed device 3. The movable frame member 2a and/or the fixed frame member 2b of the photopolymerizable resin molding frame 2 is formed of a light-transmitting material. The light irradiator 1 is disposed at a predetermined position where it can apply light to a photopolymerizable resin material R filled in the frame 2 through the light-transmitting material portion of the frame 2.

The light irradiator 1 in this apparatus has a rod-shaped halogen lamp 4 that emits visible light.

The resin feed device 3 comprises a resin reservoir 3g, a weighing device 3f with a solenoid valve, an injection cylinder 3c with a nozzle 3b at the distal end, and a plunger driving cylinder 3e with a piston having a plunger 3d at the distal end which slides in the injection cylinder 3c. It should be noted that the inner wall of the nozzle 3b is formed with a stopper portion 3b′ for the plunger 3d which projects inwardly in the form of a step.

In addition, the apparatus is provided with a mold clamping device, which comprises a fixed plate 5 that is installed at the side which is closer to the nozzle 3b, a pair of tie bars 7 that project outwardly from the fixed plate 5, a movable plate 6 that is slidably carried on the tie bars 7, and a mold clamping cylinder 8 that is connected to the movable plate 6.

The fixed frame member 2b is attached to the surface of the fixed plate 5, and the movable frame member 2a, which is made of a light-transmitting material, is attached to the inner surface of the movable plate 6. Accordingly, as the mold clamping cylinder 8 is activated, the movable plate 6 moves toward the fixed plate 5 along the tie bars 7, thereby clamping the frame 2 (comprising the frame members 2a and 2b).

It should be noted that, since the movable plate 6 has a communicating portion (window) 6a that transmits light applied from the irradiator 1, the light from the irradiator 1 passes through the communicating portion 5a of the movable plate 6 and then passes through the light-transmitting frame portion (movable frame member 2a) to irradiate the photopolymerizable resin material R in the cavity C.

The operation of this apparatus will be explained below.

First, the solenoid valve of the weighing device 3f is activated in a state where the plunger 3d of the resin feed device 3 is withdrawn toward the plunger driving cylinder 3e, as shown in Fig. 1(a), to pour a predetermined amount of photopolymerizable resin material R into the injection cylinder 3c from the resin reservoir 3g.

Next, the plunger driving cylinder 3e is activated to advance the plunger 3d as far as the stopper portion 3b′ of the nozzle 3b at the distal end of the injection cylinder 3c. Thus, the photopolymerizable resin material R poured into the injection cylinder 3c is filled into the cavity C in the frame 2.

Fig. 1(b) shows the state where the photopolymerizable resin material R is filled in the cavity C that is defined between the clamped frame members 2a and 2b, as described above. At this time, the plunger 3d advances toward the stopper portion 3b′ of the nozzle 3b to isolate physically the photopolymerizable resin material R filled in the cavity C defined between the frame members 2a and 2b from the photopolymerizable resin material R in the resin feed device 3. The plunger 3d also serves to maintain the photopolymerizable resin material R in the resin feed device 3 in a light-shielded condition.

Next, when the lamp of the light irradiator 1 is turned on in the state shown in Fig. 1(b), the resin material R in the cavity C defined in the frame 2 is irradiated with light to polymerize, but the resin material R in the resin feed device 3 is not polymerized because it is shielded from light by the plunger 3d.

Since the resin material R polymerized in the cavity C is physically isolated from the resin material R in the resin feed device 3, there is no possibility that the unpolymerized resin material R will adhere to the molded product when removed from the frame 2.

Finally, the mold clamping cylinder 8 is activated to move the movable plate 6 toward the light irradiator 1, thereby opening the frame 2 comprising the frame members 2a and 2b. After the molded product is removed from the frame 2, the plunger 3d is returned to the position that is shown in Fig. 1(a).

By the above-described procedure, one cycle of the molding process by the apparatus of the present invention is completed.

As has been described above, with the photopolymerization molding apparatus of the present invention there is no risk that the photopolymerizable resin material R in the resin feed device 3 will be undesirably polymerized so as to lose its fluidity. There is therefore no possibility of the filling of the resin material R being obstructed in the subsequent molding cycle.

Accordingly, the apparatus of the present invention is suitable for continuous production of photopolymerization moldings.

In addition, according to this apparatus, there is no possibility that part of the photopolymerizable resin material R in the resin feed device 3 will be polymerized and filled into the frame 2 in the subsequent molding cycle. Accordingly, the physical properties of mass-produced moldings are stabilized.

Further, since no unpolymerized resin material R will adhere to moldings produced in this apparatus, there is no fear of the moldings being contaminated.

Since the light irradiator 1 of the apparatus employs a halogen lamp that emits a visible ray, moldings with a considerably large wall thickness can be produced with ease.

### Embodiment 2:

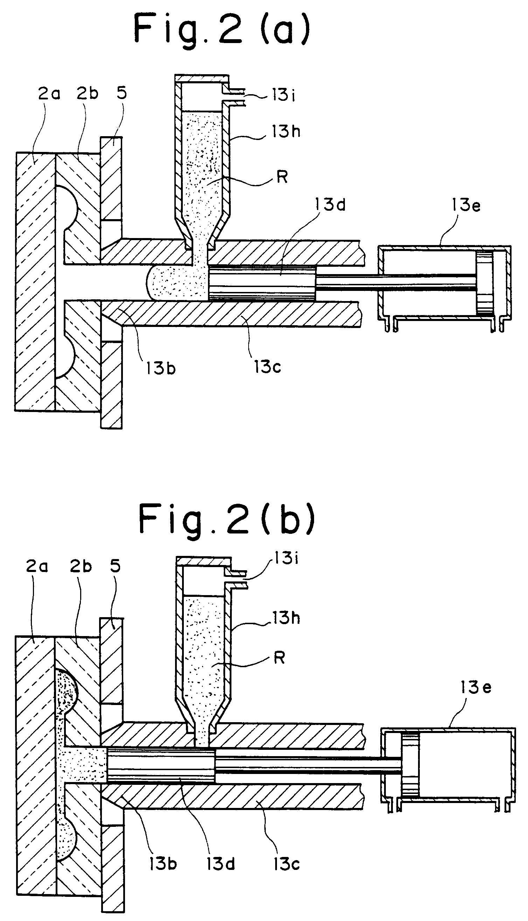

The photopolymerization molding apparatus of this embodiment employs the same light irradiator and mold clamping device as those in the first embodiment; therefore, the photopolymerizable resin feed device in this embodiment and portions associated therewith, which are schematically shown in Figs. 2(a) and 2(b), will be mainly explained below.

A weighing device that constitutes a part of the feed device in this embodiment comprises a liquid discharge device 13h that is activated by air pulse to discharge a photopolymerizable resin material R quantitatively. Thus, by introducing compressed air into the device 13h through an air pulse inlet 13i for a predetermined period of time, the photopolymerizable resin material R is discharged into an injection cylinder 13c. It should be noted that the compressed air introducing time depends on the size of a molded article to be produced, the fluidity of the photopolymerizable resin material R employed and the pressure of compressed air, but it is normally in the range of from about 0.1 sec to about several tens of seconds.

The injection cylinder 13c in this apparatus has a plunger 13d and a nozzle 13b, which are similar to those in the first embodiment. The plunger 13d is connected to a plunger driving cylinder 13e so that the plunger 13d moves in the injection cylinder 13c as far as the tip of the nozzle 13b by activating the cylinder 13e.

Fig. 2(b) shows a state where the plunger 13d is moved as far as the tip of the nozzle 13b to fill the photopolymerizable resin material R into the cavity defined between the frame members 2a and 2b.

In this embodiment also, the plunger 13d physically isolates the photopolymerizable resin material R filled in the cavity defined in the frame 2 from the photopolymerizable resin material R in the resin feed device and also serves to maintain the resin material R in the resin feed device in a light-shielded condition, in the same way as in the first embodiment.

In this embodiment, the nozzle 13b has an inner diameter which is equal to the inner diameter of the injection cylinder 13c as far as its tip so that the nozzle 13b will not limit the movement of the plunger 13d (i.e., no stopper is provided at the tip of the nozzle 13b). Accordingly, the photopolymerizable resin material R can be continuously pressed to fill the cavity in the frame 2 by continuously activating the plunger driving cylinder 13e even during the irradiation with light. Thus, the shrinkage of the photopolymerizable resin material R in the frame 2 that occurs when the resin material R is polymerized is compensated for by the resin material R that is continuously injected into the frame 2.

As has been described above, in the molding apparatus of this embodiment, it is possible to prevent the polymerization of the resin material R in the feed device during the irradiation with light by virtue of the action of the plunger 13d, and there is therefore no obstacle to the subsequent molding cycle. Accordingly, the apparatus is superior in the productivity in continuous operation. In addition, there is no possibility that the unpolymerized resin material R will adhere to the polymerized moldings. Thus, moldings of uniform quality can be obtained in succession without contamination.

Further, in the molding apparatus of this embodiment, the volume shrinkage of the molded product in the frame 2 that is formed by light irradiation is always compensated for by the photopolymerizable resin material R that is continuously injected. Accordingly, the dimensional accuracy of the resulting moldings improves markedly.

### Embodiment 3:

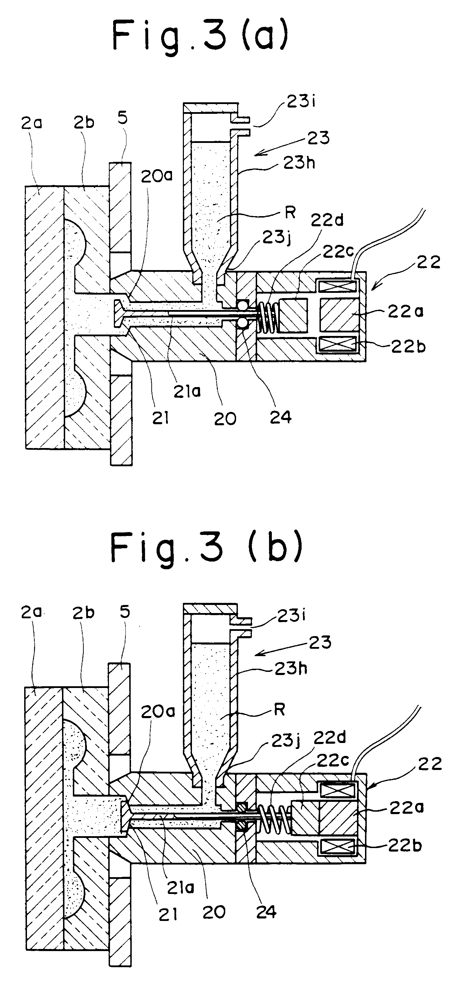

The photopolymerization molding apparatus of this embodiment employs the same light irradiator and mold clamping device as those in the first embodiment; therefore, the photopolymerizable resin feed device in this embodiment and portions associated therewith, which are schematically shown in Figs. 3(a) and 3(b), will be mainly explained below.

A compressed air-operated liquid discharge device 23 that constitutes a part of the resin feed device in this embodiment comprises a barrel 23h that contains a photopolymerizable resin material R, the barrel 23h having a compressed air inlet 23i that is provided in the upper portion and a photopolymerizable resin outlet 23j that is provided in the bottom.

The photopolymerizable resin outlet 23j extends through the wall of an injection cylinder 20, in which a stem 21a of a shutter pin 21 is slidably shielded through an O-ring 24 that is attached to the rear end thereof.

The rear end of the stem 21a of the shutter pin 21 is provided with a driving mechanism 22 (comprising a fixed core 22a, a coil 22b, a movable core 22c, a spring 22d, etc.) which is similar to that of a solenoid valve.

The shutter pin 21 is disposed in a recessed area provided at the forward end of the injection cylinder 20.

When the compressed air that is introduced through the compressed air inlet 23i pressurises the photopolymerizable resin material R in the barrel 23h and, at the same time, the driving mechanism 22 is activated, the shutter pin 21 is moved to provide communication between the cavity and the inside of the cylinder 20 by virtue of the shielding relationship between the shutter pin 21 and the central edge 20a of the recess that is formed at the forward end of the nozzle, as shown in Fig. 3(a), so that the photopolymerizable resin material R that is held under pressure is injected into the cavity that is defined between the frame members 2a and 2b.

When the driving mechanism 22 is activated thereafter, the shutter pin 21 is brought into close contact with the central edge 20a of the nozzle recess by the resilient restoring force from the spring 22d (which expands at this time), thereby cutting off the communication between the cavity and the inside of the cylinder 20, and thus suspending the supply of the photopolymerizable resin material R into the cavity, as shown in Fig. 3(b).

The photopolymerizable resin feed device in this embodiment makes it possible to control the amount of photopolymerizable resin material R supplied into the cavity by controlling the length of time that the driving mechanism 22 is activated.

When the shutter pin 21 forms a closed state, as shown in Fig. 3(b), the photopolymerizable resin material R in the cavity defined between the frame members 2a and 2b and the photopolymerizable resin material R in the resinfeed device are physically isolated from each other and the photopolymerizable resin material R in the resin feed device is maintained in a light-shielded condition.

Accordingly, the photopolymerizable resin material R in the injection cylinder 20 of the resin feed device will not enter into photopolymerization when the photopolymerizable resin material R in the cavity is irradiated with light, in the same way as in the first and second embodiments. In addition, there is no fear that the unpolymerized resin material R will adhere to the article that is molded at the same time as polymerization takes place. Accordingly, the molded product can be removed from the frame 2 without contamination or surface tackiness which would otherwise be caused by the unpolymerized resin material R.

As has been detailed above, according to the present invention, the photopolymerizable resin material that is filled into the cavity in the frame and the photopolymerizable resin material in the resin feed device are physically completely isolated from each other by the light shutter mechanism, so that the photopolymerizable resin material in the resin feed device can be maintained in a light-shielded condition. As a result, when the light irradiator is turned on, the photopolymerizable resin material in the frame is irradiated with light to polymerize, whereas the photopolymerizable resin material in the resin feed device, which is completely shielded from light, is prevented from polymerizing before it is filled into the frame.

The photopolymerization molded product, which is physically isolated from the photopolymerizable resin material in the resin feed device, can be removed from the frame without adhesion of the unpolymerized resin material thereto.

Thus, the photopolymerizable resin material in the resin feed device is prevented from entering into polymerization and losing its fluidity when the photopolymerizable resin material in the frame is irradiated with light, so that the photopolymerizable resin material can be fed into the frame smoothly without any obstacle in the subsequent photopolymerization molding cycle.

Since it is also possible to avoid the problem that the photopolymerizable resin material in the resin feed device is undesirably polymerized and the polymerized material is filled into the frame in the subsequent molding cycle, even if the polymerization molding cycle is repeated in succession, the physical properties of the moldings are maintained stably.

In addition, the polymerization molded product can be removed from the frame without the problem that the molded product or the operator's hands are contaminated with the unpolymerized resin material.

Since the apparatus of the present invention is arranged such that the photopolymerizable resin material is continuously fed into the frame during photopolymerization molding process, an amount of photopolymerizable resin material that is equivalent to the volume shrinkage of the molded product that has occurred in the frame iscontinuously injected into the frame to compensate for the shrinkage at all times. Accordingly, the quality of the molded products is stabilized and the dimensional accuracy improves markedly.

In addition, the apparatus of the present invention requires no high pressure to pressurize the resin material in the frame as in the conventional injection molding process or the like but only a low pressure and hence needs no large-sized high-pressure application equipment. Accordingly, it is possible to reduce the overall size of the apparatus. Thus, the present invention provides a relatively small-size photopolymerization molding apparatus which is capable of efficiently producing photopolymerization moldings of stable quality with excellent operation efficiency.

## Claims

1. A photopolymerization molding apparatus which comprises a photopolymerizable resin molding frame (2) comprising a movable frame member (2a) and a fixed frame member (2b), a device (3) for feeding photopolymerizable resin (R) provided adjacent to said fixed frame member, a light-transmitting portion provided in each or either one of said movable and fixed frame members of said frame (2); and a light irradiator for photopolymerisation (1) is disposed at a predetermined position where it can apply light to photopolymerizable resin material (R) in said frame (2) through said light-transmitting portion of said frame; characterised in that a light shutter mechanism (4) is provided in the vicinity of the forward end of the resin feed section of said photopolymerizable resin feed device (3).

2. A photopolymerization molding apparatus according to Claim 1, further comprising a mold clamping device which comprises a fixed plate (5) to which said fixed frame member (2b) is attached, a movable plate (6) to which said movable frame member (2a) is attached, and a pressing device (8) that moves said movable plate (6) so as to press against said fixed plate (5).

3. A photopolymerization molding apparatus according to Claim 2, wherein the movable plate (6) has a light-transmitting communicating portion or window (6a), said light irradiator (1) being disposed at a position where it can transmit light into said frame through said light-transmitting communicating portion (6a) of said movable plate.

4. A photopolymerization molding apparatus according to any of Claims 1 to 3, wherein said light shutter mechanism (4) is provided at the tip of a nozzle (3b) that is formed in the resin feed section of said resin feed device (3).

5. A photopolymerization molding apparatus according to any of Claims 1 to 3, wherein said light shutter mechanism comprises a nozzle that is formed in the resin feed section of said resin feed device (3), and a resin extruding plunger (3d) that slides in said nozzle (3b) as far as the tip thereof.

6. A photopolymerization molding apparatus according to Claim 5, wherein said resin extruding plunger (3d) is capable of continuously applying extruding force to said photopolymerizable resin material (R) while it is being irradiated with light.

7. A photopolymerization molding apparatus according to any of Claims 1 to 3, wherein said light shutter mechanism (4) comprises a nozzle that is formed in the resin feed section of said resin feed device, and a shutter pin (21) which is movable in and out of contact with the end wall (20a) of the tip of said nozzle to thereby close and open the nozzle opening.

8. A photopolymerization molding apparatus according to any of Claims 1 to 7, wherein said light irradiator (1) when in use emits visible light.

9. A method of molding which comprises filling a photopolymerisable polymeric composition (R) into the molding frame (2) of an apparatus as claimed in any preceding claim and subjecting the composition to irradiation for a time sufficient to cause polymerisation thereof and removing the resultant molding from the frame.

10. A method as claimed in Claim 9, wherein the composition is compressed in the frame (2) to a pressure of 9.8 x 10² to 49.03 x 10⁵ Pa (0.01 to 50 kgf/cm²).

## Patentansprüche

1. Photopolymerisationsformapparat mit einem Formrahmen (2) für ein photopolymerisierbares Harz umfassend ein bewegliches Rahmenteil (2a) und ein feststehendes Rahmenteil (2b), eine Vorrichtung zum Zuführen des photopolymersisierbaren Harzes (R), die angrenzend an das feststehende Rahmenteil angeordnet ist, einen lichtdurchlässigen Bereich in jedem oder irgendeinem der beweglichen und feststehenden Rahmenteile des Rahmens (2); und ein Lichtstrahler für die Photopolymerisation (1) ist an einer vorbestimmten Position angeordnet, wo er dem photopolymersisierbaren Harzmaterial (R) in den Rahmen (2) durch den lichtdurchlässigen Bereich des Rahmens Licht zuführen kann, dadurch gekennzeichnet, daß in der Nähe des vorderen Endes des Harzzuführabschnittes der Zuführvorrichtung für das photopolymerisierbare Harz (3) ein Lichtblendenmechanismus (4) angeordnet ist.

2. Photopolymerisationsformapparat nach Anspruch 1, ferner umfassend eine Formklemmvorrichtung, die eine feststehende Platte (5), an welcher das feststehende Rahmenteil (2b) angeordnet ist, eine bewegliche Platte (6), an welcher das bewegliche Rahmenteil (2a) angeordnet ist, und eine Druckvorrichtung (8), die die bewegliche Platte (6) bewegt, um sie gegen die feststehende Platte (5) zu pressen, umfasst.

3. Photopolymerisationsformapparat nach Anspruch 2, worin die bewegliche Platte (6) einen lichtdurchlässigen kommunizierenden Bereich oder Fenster (6a) besitzt, wobei der Lichtstrahler (1) an einer Position angeordnet ist, wo er Licht in den Rahmen durch den lichtdurchlässigen kommunizierenden Bereich (6a) der beweglichen Platte senden kann.

4. Photopolymerisationsformapparat nach einem der Ansprüche nach 1 bis 3, worin der Lichtblendenmechanismus (4) an der Spitze einer Düse (3b), die in dem Harzzuführabschnitt der Harzzuführvorrichtung (3) ausgebildet ist, angeordnet ist.

5. Photopolymerisationsformapparat nach einem der Ansprüche 1 bis 3, worin der Lichtblendenmechanismus eine Düse, die in den Harzzuführabschnitt der Harzzuführvorrichtung (3) ausgebildet ist, und einen Harzextrudierdruckkolben (3d), der in der Düse (3b) bis in die Spitze derselben gleitet, umfasst.

6. Photopolymerisationsformapparat nach Anspruch 5, worin der Harzextrudierdruckkolben (3d) imstande ist, dem polymerisierbaren Harzmaterial (R), während dieses mit Licht bestrahlt ist, eine kontinuierliche Extrudierkraft aufzubringen.

7. Photopolymerisationsformapparat nach einem der Ansprüche 1 bis 3, worin der Lichtblendenmechanismus (4) eine Düse umfasst, die in dem Harzzuführabschnitt der Harzzuführvorrichtung ausgebildet ist, und einen Blendensperrstift (21), der in und aus einem Kontakt mit der Endwand (20a) der Spitze der Düse, dabei die Düsenöffnung schließend und öffnend, bewegbar ist, umfasst.

8. Photopolymerisationsformapparat nach einem der Ansprüche 1 bis 7, worin der Lichtstrahler (1) im Betrieb sichtbares Licht emittiert.

9. Formverfahren, umfassend das Einfüllen einer photopolymerisierbaren Polymerzubereitung (R) in einen Formrahmen (2) eines Apparates nach einem der vorangehenden Ansprüche und das Aussetzen der Zubereitung an eine Bestrahlung für eine ausreichende Zeit, um die Polymerisation derselben zu bewirken und die Entnahme der resultierenden Form aus dem Rahmen.

10. Verfahren nach Anspruch 9, worin die Zubereitung in dem Rahmen (2) zu einem Druck von 9,8 x 10² bis 49,03 x 10⁵ Pa (0,01 bis 50 kgf/cm²) komprimiert wird.

## Revendications

1. Un dispositif de moulage par photopolymérisation qui comprend un cadre de moulage de résine photopolymérisable (2) constitué d'un élément de cadre mobile (2a) et d'un élément de cadre fixe (2b), un système (3) d'alimentation en résine photopolymérisable (R) adjacent à l'élément de cadre fixe, une portion transmettant la lumière placée dans chacun ou l'un des éléments mobile et fixe du cadre (2) ; et dans lequel un irradiateur de lumière pour la photopolymérisation (1) est disposé à une position prédéterminée où il peut appliquer la lumière à une résine photopolymérisable (R) contenue dans le cadre (2) via la portion du cadre transmettant la lumière ; caractérisé en ce qu'un mécanisme obturateur de lumière (4) est placé à proximité de l'extrémité avant de la section d'alimentation en résine du système d'alimentation en résine photopolymérisable (3).

2. Un dispositif de moulage par photopolymérisation selon la Revendication 1, comprenant en outre un système de serrage de moule constitué d'une plaque fixe (5) à laquelle est fixé l'élément de cadre fixe (2b), d'une plaque mobile (6) à laquelle est fixé l'élément de cadre mobile (2a), et d'un système presseur (8) qui déplace la plaque mobile (6) de façon à la presser contre la plaque fixe (5).

3. Un dispositif de moulage par photopolymérisation selon la Revendication 2, dans lequel la plaque mobile (6) a une portion de communication transmettant la lumière ou fenêtre (6a), l'irradiateur de lumière (1) étant disposé à une position où il peut transmettre la lumière dans le cadre via la portion de communication transmettant la lumière (6a) de la plaque mobile.

4. Un dispositif de moulage par photopolymérisation selon l'une ou l'autre des Revendications 1 à 3, dans lequel le mécanisme obturateur de lumière (4) est placé à l'extrémité d'une buse (3b) qui est formée dans la section d'alimentation en résine du système d'alimentation en résine (3).

5. Un dispositif de moulage par photopolymérisation selon l'une ou l'autre des Revendications 1 à 3, dans lequel le mécanisme d'obturation de lumière comprend une buse qui est formée dans la section d'alimentation en résine du système d'alimentation en résine (3), et un plongeur d'extrusion (3d) qui coulisse dans la buse (3b) jusqu'à la pointe de celle-ci.

6. Un dispositif de moulage par photopolymérisation selon la Revendication 5, dans lequel le plongeur d'extrusion de résine (3d) est capable d'appliquer de façon continue une force d'extrusion à la résine photopolymérisable (R) pendant que celle-ci est irradiée de lumière.

7. Un dispositif de moulage par photopolymérisation selon l'une ou l'autre des Revendications 1 à 3, dans lequel le mécanisme obturateur de lumière (4) comprend une buse qui est formée dans la section d'alimentation en résine du système d'alimentation en résine, et une goupille d'obturation (21) qui est mobile pour venir en contact avec la paroi d'extrémité (20a) de la pointe de la buse et s'en écarter afin de fermer et ouvrir l'ouverture de la buse.

8. Un dispositif de moulage par photopolymérisation selon l'une ou l'autre des Revendications 1 à 7, dans lequel l'irradiateur de lumière (1), lorsqu'il est en fonctionnement, émet une lumière visible.

9. Un procédé de moulage qui consiste à injecter une composition polymère photopolymérisable (R) dans le cadre de moulage (2) d'un dispositif selon l'une ou l'autre des revendications qui précèdent et à soumettre la composition à une irradiation pendant suffisamment longtemps pour en provoquer la polymérisation, puis à démouler du cadre la pièce moulée résultante.

10. Un procédé selon la Revendication 9, dans lequel la composition est comprimée dans le cadre (2) à une pression comprise entre 9,8 x 10² et 49,03 x 10⁵ pascals (0,01-50 kgf/cm²).
